# EUROPEAN PATENT APPLICATION

(11) **EP 2 706 532 A1**
(43) Date of publication of application: **12.03.2014**
(21) Application number: 13167566.2
(22) Date of filing: 13.05.2013
(51) Int. Cl.: G11B 27/32, G11B 27/34

(54) **Information storage medium having interactive graphic data for using a pointer to control a menu of audio/video data and method and apparatus for reproducing stored data**

(30) Priority: 05.09.2012 KR 20120098482
(71) Applicant: Samsung Electronics Co., Ltd, Gyeonggi-do 443-742 (KR)
(72) Inventor: Bae, Jae-min, Gyeonggi-do (KR)
(74) Representative: Bray, Richard Anthony

(57) **Abstract**

An apparatus (400) for reproducing stored data by using a pointer is provided. The apparatus including: a reader (420) which reads audio/video (AV) data and interactive graphic data including at least one menu; an information input (430) which obtains information related to the position of the pointer; a decoder (440) which decodes the AV data and the interactive graphic data; and a controller (410) which determines a selection state of a button included in the at least one menu by comparing information related the position and size of the button, included in the interactive graphic data, with the information related to the position of the pointer.

## Description

### CROSS-REFERENCE TO RELATED PATENT APPLICATION

This application claims the benefit of Korean Patent Application No. 10-2012-0098482, filed on September 5, 2012, in the Korean Intellectual Property Office, the disclosure of which is incorporated herein by reference, in its entirety.

### BACKGROUND

### 1. Field

The inventive concept relates to the reproduction of audio/video (AV) data. More particularly, the inventive concept relates to an information storage medium having recorded thereon interactive graphic data for controlling the menu of AV data by using a pointer, and a method and apparatus for reproducing data stored therein.

### 2. Description of the Related Art

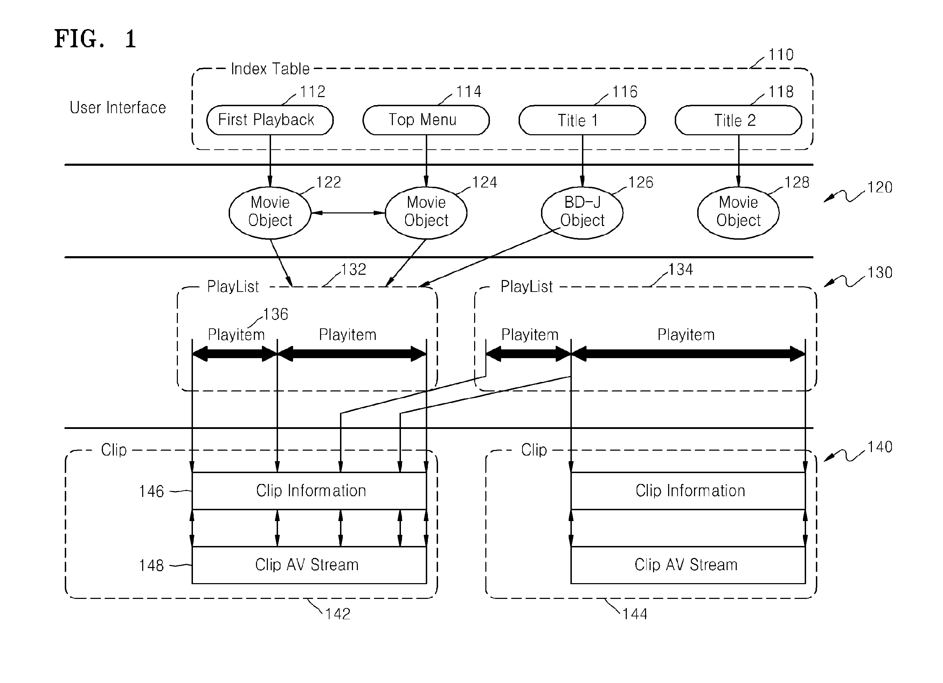

An image-type menu that may be selected by a user is displayed on a movie on a medium, for example, an optical disc such as a Blu-ray Disc. FIG. 1 is a diagram which illustrates an exemplary structure of a Blu-ray disc data model, namely, a BD-ROM data model. The Blu-ray disc data model includes four layers, that is, an index table 110, a movie/Blu-ray Disc Java (BD-J) object 120, a playlist 130, and a clip 140.

The index table 110 has a top level table structure that defines titles of a Blu-ray disc. The titles correspond to entries included in the index table 110. For example, a first playback 112, a top menu 114, a title 1 116, and a title 2 118 are titles. Each title may be a high definition movie mode (HDMV) title or a BD-J title. When an HDMV title is activated, a movie object which corresponds to the HDMV title is loaded. When a BD-J title is activated, a BD-J object corresponding to the BD-J title is loaded. For example, when the first playback 112 that is an HDMV title is activated by a user, a movie object 122 is loaded. When the title 1 116 that is a BD-J title is activated, a BD-J object 126 is loaded. Each object is associated with a playlist 132 or a playlist 134. Each of the playlists 132 and 134 includes at least one playitem 136. The playitem 136 refers to a start position and an end position of each of clips 142 and 144 on a time axis.

Each of the clips 142 and 144 includes a clip AV stream file 148 and a clip information file 146. The clip AV stream file 148 stores audio/video data. The audio/video data may have a form of an MPEG-2 transmission stream. Each of the clips 142 and 144 includes one clip AV stream file 148 and one clip information file 146 corresponding to the one clip AV stream file 148. The clip information file 146 may include information relating to a time stamp of an access point of a corresponding AV stream.

When a specific title is activated by a user, a corresponding movie object is loaded and a playlist starts to be reproduced. A playitem included in a playlist reproduces A/V data with reference to a corresponding clip information file and a start time and an end time of a presentation time stamp (PTS), and at this time, the playitem may reproduce subtitle data and an interactive graphic stream other than the A/V data. Menu information that may control the reproduction of the A/V data is included in the interactive graphic stream.

That is, menu information included in a movie stream is decoded while a movie is reproduced, and a menu is displayed on a screen at a point in time when the menu should be displayed or at a point in time when the menu is activated by a user. The menu may include a plurality of buttons. According to known methods, when a BD-ROM reproducing apparatus receives a selection signal from a remote control, a command assigned to an activated button is executed. The command performs a role of reproducing a movie from a specific portion thereof, changing a reproduction state of a movie, or changing setting information, such as a language.

In addition, the menu has a top menu and a sub-menu. When a user selects a predetermined button of a remote control, for example, a button such as an "up" button or a "down" button, the top or sub-menu may be entered. In addition, the image of the menu stores an index value of a palette table in which one pixel is formed of Red, Green, Blue and Alpha (RGBA), and each pixel of the menu may be transparent. That is, although the area of the menu is determined according to a horizontal and vertical position of an area from which the menu begins and information relating to the width and height of the menu (a rectangular shape), the image of the menu that is shown on a display device may have a round shape or another shape other than the rectangular shape.

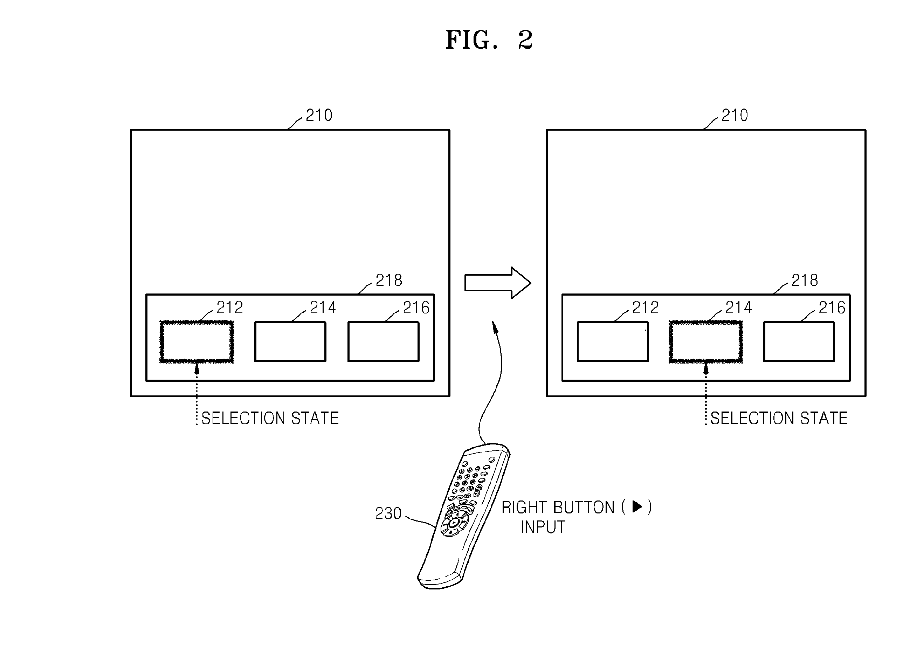

FIG. 2 is a diagram which illustrates a method of controlling a menu of a movie stored in a known optical disc. In a left screen 210 of FIG. 2, a menu page is displayed on video data being currently reproduced. The menu page includes a first button 212, a second button 214, a third button 216, and a background menu 218 that decorates a background of each button. When the menu page is displayed, the leftmost button, namely, the first button 212, may be activated. In this state, when a user presses a right button of the remote control 230, a button positioned on the right side of the first button 212 (that is, the second button 214) is selected. Simultaneously, the selection of the first button 212 is released. In this state, when a user presses an execution button (for example, a round button positioned within the arrows) of the remote control 230, a command assigned to the second button 214 is executed.

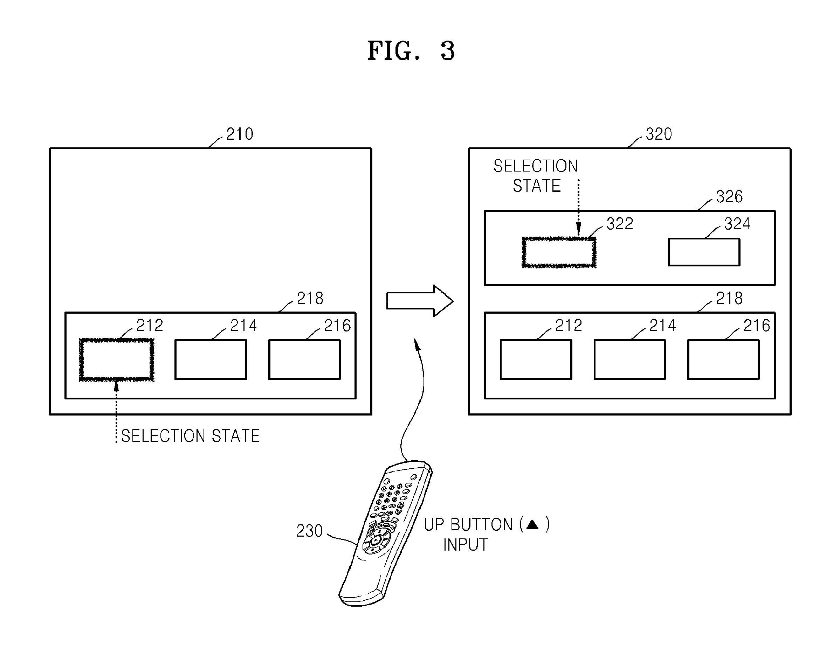

FIG. 3 is a diagram which illustrates a method of entering a top menu or a sub-menu in a movie stored in a known optical disc. The left screen 210 of FIG. 3 is the same as the left screen 210 illustrated in FIG. 2. In a state where the first button 212 has been activated, the top menu is displayed as in a right screen 320 when an "up" button on a remote control 230 is pressed. The top menu includes a fourth button 322, a fifth button 324, and a top background menu 326 that decorates the fourth and fifth buttons 322 and 324. For example, the fourth button 322 may be activated and may be displayed in an activated state. In this state, when a "down" button of the remote control 230 is pressed, the top menu may disappear to return to an original menu. Even when it is desired to enter the sub-menu in a state where the first button 212 of the left screen 210 has been activated or to return to an original menu from the entered sub-menu, an operation is similar to that of the above case.

In this manner, a menu of a movie stored in a known optical disc may be controlled by using a remote control. When a user selects a top, bottom, left, or right button on a remote control, a focus moves to a top, bottom, left, or right menu adjacent to a currently selected menu. The controlling of a remote control needs to be performed several times in order to move to a specific menu, causing inconvenience to users.

### SUMMARY

The inventive concept provides a method and apparatus for controlling a menu in a movie, or the like, which is stored in an optical disc, by using a pointer to solve the above-described problem.

According to the present invention there is provided an apparatus and method as set forth in the appended claims. Other features of the invention will be apparent from the dependent claims, and the description which follows.

The inventive concept also provides an information storage medium which stores data that may be reproduced, by using a pointer.

According to an aspect of an exemplary embodiment, there is provided an apparatus for controlling a menu for reproducing data stored in an optical disc by using a pointer, the apparatus including: a reader which reads audio/video (AV) data and interactive graphic data including at least one menu from the optical disc; an information input which obtains information relating to the position of the pointer; a decoder which decodes the AV data and the interactive graphic data; and a controller which determines a selection state of a button included in the at least one menu by comparing information relating to a position and a size of the button included in the interactive graphic data, with the information relating to the position of the pointer.

The information relating to the position and size of the button may be included in a bitmapmask definition segment (BDS) included in the interactive graphic data, and the BDS may include a bitmask value, which represents, with "0" and "1", an image of the button included in the at least one menu, and information relating to a button to which the bitmask value is applied.

The controller may switch a state of the button to a selection state when a bitmask value which corresponds to the information relating to the position of the pointer indicates "1" and the button is a button to which the bitmask value is applied.

The bitmask value may include a bitmask value obtained by encoding the image of the button, represented with "0" and "1," through Run Length Encoding.

The interactive graphic data may include an interactive composition segment (ICS) and an object definition segment (ODS), the information relating to the position of the button may be the coordinates of the upper left corner of the button, included in the ICS, and the information relating to the size of the button may be the width and height of the button, included in the ODS.

The ICS may include flag information indicating whether the button is selectable, and the controller may determine a button which the pointer indicates, based on the information relating to the position of the pointer and the information relating to the position and size of the button, and may switch a state of the button to a selection state when the flag information of the determined button indicates that the button is selectable.

The interactive graphic data may include information relating to a plurality of cursor images, the controller may determine a cursor image which corresponds to the at least one menu from among the plurality of cursor images, and the decoder may display the determined cursor image.

According to another aspect of an exemplary embodiment, there is provided a storage medium which stores data that can be reproduced by using a pointer, the storage medium including: audio/video (AV) data; and interactive graphic data, wherein the interactive graphic data includes a bitmapmask definition segment (BDS), and the BDS includes information relating to a bitmask, which represents, with "0" and "1," an image of a button included in a menu, and information relating to a button to which the bitmask is applied.

The interactive graphic data may include an interactive composition segment (ICS), the ICS may include information relating to at least one menu page, the at least one menu page may include at least one button, and the information related to the bitmask may correspond to the information relating to the at least one menu page.

When the pointer is positioned where a value of the bitmask is "1," a state of a button which corresponds to the value of the bitmask may be switched to a selection state.

According to another aspect of an exemplary embodiment, there is provided a storage medium which stores data that can be reproduced by using a pointer, the storage medium including: audio/video (AV) data; and interactive graphic data, wherein the interactive graphic data includes an interactive composition segment (ICS) and an object definition segment (ODS), the ICS includes information relating to the position of a button and flag information which indicates whether the button is selectable, and the ODS includes information relating to the size of the button.

When the pointer is positioned on the button and the flag information indicates that the button is selectable, a state of the button may be switched to a selection state.

According to another aspect of an exemplary embodiment, there is provided a method of controlling an audio/video (AV) data menu by using a pointer, the method including: obtaining from an optical disc information relating to the position and size of a button included in the menu from an optical disc; obtaining information relating to the position of the pointer; and determining a selection state of the button by comparing the information relating to the position and size of the button with the information relating to the position of the pointer.

The information relating to the position and size of the button may be included in a bitmapmask definition segment (BDS) included in the interactive graphic data, and the BDS may include a bitmask value, which represents, with "0" and "1," an image of the button included in the at least one menu, and information relating to a button to which the bitmask value is applied, wherein the determining of the selection state of the button includes switching a state of the button to a selection state when a bitmask value which corresponds to the information relating to the position of the pointer indicates "1" and the button is a button to which the bitmask value is applied.

The method may further include obtaining flag information which indicates whether the button is selectable, from the optical disc, wherein the determining of the selection state of the button includes switching a state of the button to a selection state when the flag information indicates that the button is selectable.

According to an exemplary embodiment, the inconvenience of performing key input several times to control a menu by using a known remote control may be avoided, and the menu may be intuitively controlled in an easy fashion by using a pointer.

In addition, the menu may be selected when a cursor is positioned in the image area of a button displayed by using bitmask information.

In addition, whether to switch a state of a background menu to a selection state may be controlled by using flag information which indicates whether the background menu is selectable.

In addition, differentiated cursor images may be displayed by providing cursor information which corresponds to each menu.

An exemplary embodiment may further provide an apparatus which uses a pointer to reproduce stored data, the apparatus including: a reader which reads audio/video (AV) data and interactive graphic data including at least one menu; an information input which obtains information related to the position of the pointer; a decoder which decodes the AV data and the interactive graphic data; and a controller which determines a selection state of a button included in the at least one menu by comparing information related to the button with the information related to the position of the pointer. The information related to the button may be information related to a position and a size of the button included in the interactive graphic data.

The information related to the position and size of the button may include a bitmapmask definition segment (BDS) included in the interactive graphic data, and the BDS comprises a bitmask value, which represents, with "0" and "1," an image of the button included in the at least one menu, and information related to a button to which the bitmask value is applied. The controller may switch a state of the button to a selection state when a bitmask value which corresponds to the information related to the position of the pointer indicates "1" and the button is a button to which the bitmask value is applied. The bitmask value may include a bitmask value obtained by encoding the image of the button, represented with "0" and "1," through Run Length Encoding.

### BRIEF DESCRIPTION OF THE DRAWINGS

The above and other features and advantages of the present invention will become more apparent by describing in detail exemplary embodiments thereof with reference to the attached drawings in which:

FIG. 1 is a diagram which illustrates an exemplary structure of data on a Blu-ray disc;

FIG. 2 is a diagram which illustrates a known method of controlling a menu by using a remote control;

FIG. 3 is a diagram which illustrates a known method of entering a top menu or a sub-menu by using a remote control;

FIG. 4 is a diagram which illustrates a reproducing apparatus according to an exemplary embodiment;

FIG. 5 is a diagram which illustrates bitmask information that is set on the whole menu screen, according to an exemplary embodiment;

FIG. 6 is a diagram which illustrates bitmask information that is set on a button having a non-rectangular form, according to an exemplary embodiment;

FIG. 7 is a diagram which illustrates a structure of bitmask information according to an exemplary embodiment;

FIG. 8 is a diagram which illustrates an interactive graphic stream including bitmask information according to an exemplary embodiment;

FIG. 9 is a diagram which illustrates a method of obtaining information relating to the area of a button from an interactive graphic stream, according to an exemplary embodiment;

FIG. 10 is a diagram which illustrates a method of controlling a menu by using a pointer, according to an exemplary embodiment;

FIG. 11 is a diagram which illustrates a structure of button information according to an exemplary embodiment;

FIG. 12 is a diagram which illustrates an example in which selection information is added to button information;

FIG. 13 is a diagram which illustrates a method of moving to a top menu or a sub-menu by using a pointer, according to an exemplary embodiment;

FIG. 14 is a diagram which illustrates a high definition movie mode (HDMV) transport stream including cursor information and object information according to an exemplary embodiment; and

FIG. 15 is a diagram which illustrates a sequence in which a menu is controlled by using a pointer, according to an exemplary embodiment.

### DETAILED DESCRIPTION OF THE EXEMPLARY EMBODIMENTS

Hereinafter, the exemplary embodiments will be described in detail with reference to the attached drawings. The invention may, however, be embodied in many different forms, and should not be construed as being limited to the exemplary embodiments set forth herein. Rather, these exemplary embodiments are provided so that this disclosure will be thorough and complete, and will fully convey the concept of the exemplary embodiments to those skilled in the art. In the following description, well-known functions or constructions are not described in detail since they would obscure the invention with unnecessary detail, and like reference numerals in the drawings denote like or similar elements throughout the specification.

Expressions such as "at least one of," when preceding a list of elements, modify the entire list of elements and do not modify the individual elements of the list.

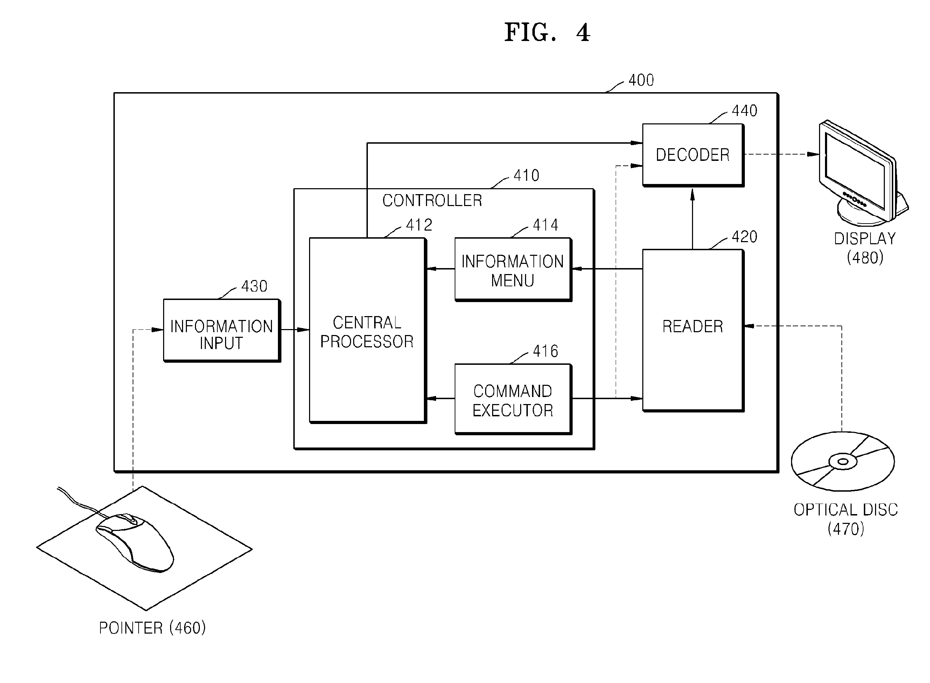

FIG. 4 is a diagram which illustrates a reproducing apparatus 400 which controls a menu of audio/video (AV) data, recorded on an optical disc, by using a pointer, according to an exemplary embodiment. Referring to FIG. 4, the reproducing apparatus 400 includes a controller 410, a reader 420, an information input 430, and a decoder 440. Such a configuration of the reproducing apparatus 400 is only by way of example, and the configuration of the reproducing apparatus 400 may be freely reconfigured within the spirit and scope of the exemplary embodiments according to the technical level of those of ordinary skill in the art. For example, a reproducer, a user certifier, and a network connector, or the like, may be additionally included in the reproducing apparatus 400, or the decoder 440 may be included in the controller 410 or a central processor 412.

The controller 410 includes the central processor 412, an information menu 414, and a command executor 416. The central processor 412 performs processes necessary for the reproducing apparatus 400 to read data stored in an optical disc 470 and to reproduce the read data. The central processor 412 determines a button, indicated by a pointer 460, by comparing information relating to the area of a button included in the menu with information relating to the position of the pointer 460, and finally changes a state of the button in a selection (activation) state with reference to selection information. Additionally, the central processor 412 may transmit an appropriate command to the decoder 440, the reader 420, or the like, to perform a function of reproducing AV data of an optical disc.

The reader 420 reads data from the optical disc 470. In particular, as illustrated in FIG. 1, the reader 420 reads a clip AV stream necessary to reproduce a playitem included in a movie playlist which is to be reproduced from an information storage medium such as an optical disc. In addition, the reader 420 may read application information necessary to reproduce an AV stream in a navigation mode.

The reader 420 may read interactive graphic (IG) data, other than the AV stream. The IG data includes information, such as an interactive composition segment (ICS), a palette definition segment (PDS), an object definition segment (ODS), an end of definition segment, and the like. The ICS includes page information including at least one menu. At least one button may be assigned to the menu, and a command for the reproduction of AV data or the control of a navigation function may be assigned to the at least one button.

The reader 420 may transmit the read data to the decoder 440 or the controller 410 according to a command received from the controller 410. According to an exemplary embodiment of the present invention, of data read by the reader 420, information relating to the menu and selection information are transmitted to the controller 410. The information relating to the menu and the selection information may be processed by the information menu 414. The selection information will described later.

The information input 430 receives an input of movement or a selection from a user. In particular, the information input 430 receives position information, depending on the movement of the pointer 460. In addition, the information input 430 receives also an event signal that is generated from the pointer 460, such as by the click of a mouse, or the like. The pointer 460 may be represented with a cursor, or the like, on a display 480. A user controls the pointer 460 based on the position of the cursor. However, in an exemplary embodiment, the pointer 460 is not limited to a mouse. That is, a touch input received from a touch pad, such as a capacitive touch screen or a pressure sensitive touch screen, also may be received by the information input 430. In this case, position information and an event directing the execution of a button are simultaneously received from the pointer 460. The display 480 may include a touch pad, and a cursor may not be displayed on the display 480. Below, for convenience of explanation, it is assumed that the pointer 460 is a mouse.

The decoder 440 decodes data to display the decoded data on the display 480, based on data or a command received from the reader 420 or the controller 410. The decoder 440 may process a highlight or emphasis effect when a button or a menu is in a selection (activation) state, as well as AV data or IG data. Information relating to the highlight or emphasis effect may be included in the IG data.

Each menu or buttons included in each menu have respective image information, and the respective image information is displayed on a screen. The respective image information may include an image that is mapped to a menu, and the image information may also include a menu that has only an image thereof and may not be selected by a user. In an exemplary embodiment, the menu that has only an image thereof, and may not be selected by a user, is referred to as a background menu. In general, an area of a button included in a menu page is determined based on the coordinates of the upper left corner at which the button is positioned as well as and the width and height of the button. That is, the area of the button is necessarily in the form of a rectangle. However, an image representing a button need not to have a form of a rectangle and may have any form in the area of the button. Accordingly, when a pointer is positioned in an area that is inside the area of the button and is also outside the area of the image representing a button, a user may be confused since it seems as though the button was selected, although the cursor is not positioned on the button. However, this problem does not occur when a menu is controlled by using a remote control.

Only when information relating to the position and size of a menu displayed on the screen is known, can information relating to a menu on which the current cursor is positioned be retrieved from the information menu 414, according to a user input. The information menu 414 or the controller 410 may process the information relating to the position and size of a menu from IG data obtained from the reader 420. The controller 410 controls a menu of AV data stored in an optical disc with a pointer by using information relating to the position of the pointer, which is obtained by the information input 430, and IG data obtained from the optical disc by the reader 420. In an exemplary embodiment, two methods are proposed to obtain information, such as, the information relating to the position and the size of a menu, which is necessary for controlling the reproduction of AV data by using the pointer.

A first method is a method of adding bitmask information which indicates information relating to the position of each button of a menu to IG data. An area where a menu button is displayed on the screen may be obtained by using the bitmask information. Additionally, information that stores the X and Y coordinates of each menu or button, which are displayed on the screen, and identification (ID) information may be provided. A main reason for introducing the bitmask information is because it is possible to allow the existing environment to not be changed by additionally using information necessary for controlling a pointer, other than information that is used for conventionally making an optical disc menu.

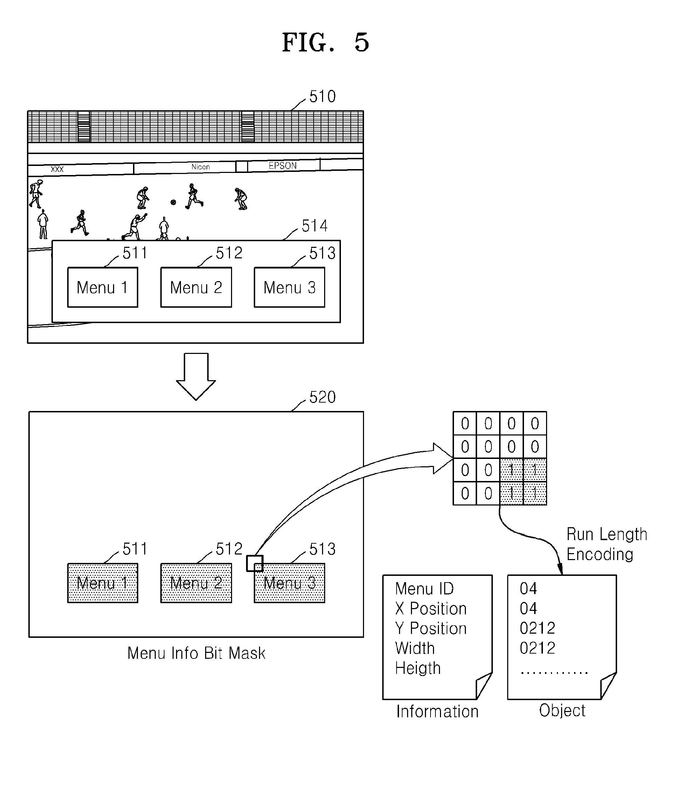

FIG. 5 is a diagram illustrating a method of controlling a menu relating to optical disc content by using bitmask information, according to an exemplary embodiment. Referring to FIG. 5, a menu screen 510 may be displayed during reproduction of a movie. The menu screen 510 includes a first menu 511, a second menu 512, a third menu 513, and a background menu 514 that decorates each menu. The menu screen 510 may be represented by a corresponding menu information bitmask 520. That is, areas that may be selected by a pointer are represented with a value of "1," and the other areas that may not be selected are represented with a value of "0." In FIG. 5, areas of the first, second, and third menus 511, 512, and 513 are set with the value of "1," and the other areas are set with the value of "0." The bitmask information may be updated together with a menu page whenever the menu page is updated. For example, when connecting a menu page defined in an ICS included in IG data with bitmask information, corresponding bitmask information may be changed whenever the menu page is changed. In an exemplary embodiment, a menu may be widely interpreted to mean that the menu includes a button.

The bitmask information includes information, such as ID, X and Y coordinates, a width and a height of a menu displayed on the screen, and a bitmask value (0 or 1) of each position of the screen. When the reader 420 reads bitmask information from an optical disc and provides the read bitmask information to the information menu 414 included in the controller 410, the central processor 412 determines whether to switch the state of a menu (or a button), on which the pointer 460 is positioned, to a selection state, by comparing information relating to the position of the pointer 460, which is received from the information input 430, with the bitmask information. In particular, when the pointer 460 is positioned in an area of a menu, which is defined by the X and Y coordinates, width, and height included in the bitmask information, and a corresponding bit mask value is "1," the central processor 412 switches the state of a corresponding menu to the selection state.

As illustrated in FIG.5, only an area which corresponds to a menu, of an area displayed on the screen, has a bitmask value. That is, the background menu 514 functions as a background image of the first through third menus 511, 512, and 513, but may not be selected by the pointer since the background menu 514 has a bitmask value of "0." In response to a bitmask value of the area of the second menu 512 is assigned with "0"s, the second menu 512 may not be selected even though the second menu 512 being displayed on the screen.

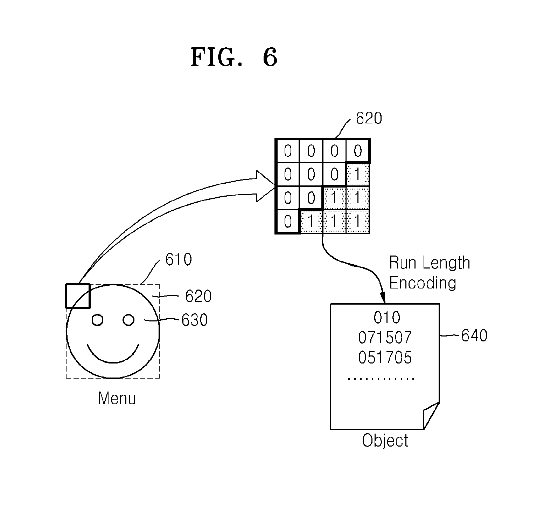

The method of using bitmask information is particularly useful when the image of a menu does not have a form of a rectangle, but rather has a round or other form. As described above, the area of a menu is determined by the X and Y coordinates; i.e., width, and height of the menu. In this case, the X and Y coordinates of the menu indicates the coordinates of the upper left corner of the menu. An area that extends by the width in the right direction from a position of the upper left corner and extends by the height in the downward direction from the position of the upper left corner is the area of the menu. That is, the area of the menu is determined as the form of a rectangle. However, as illustrated in FIG. 6, an image 630 of a menu that is displayed on the screen may have a form of a circle. There is no problem if the pointer 460 is positioned outside a menu area 610 or inside the displayed menu image 630. However, in response to the pointer 460 being positioned in an area 620 that is outside the displayed menu image 630 having the form of a circle and is inside the menu area 610 at the same time, and the menu is selected at the corresponding position, from a user's perspective, it may seem as if the menu is selected, although a cursor is positioned outside the menu. This may cause a problem when introducing a menu control method through a pointer to an optical disc manufactured to control a menu by using a known remote control. However, if by using bitmask information, a bitmask value is set as "1" only in the inside of the menu, that is, the actually shown menu image 630, and a menu ID is assigned only to the inside of the menu, the menu may be selected only when a cursor is accurately positioned in the menu image 630.

In addition, a bitmask value formed of "0" and "1" may be encoded to reduce the size of data. For example, when a run length encoding method 640 is used, a bitmask value in which "0" is repeated seven times, "1" is repeated five times, and then "0" is repeated seven times again may be compressed as "071507." There are various methods for data compression, and the exemplary embodiments are not limited to the above example.

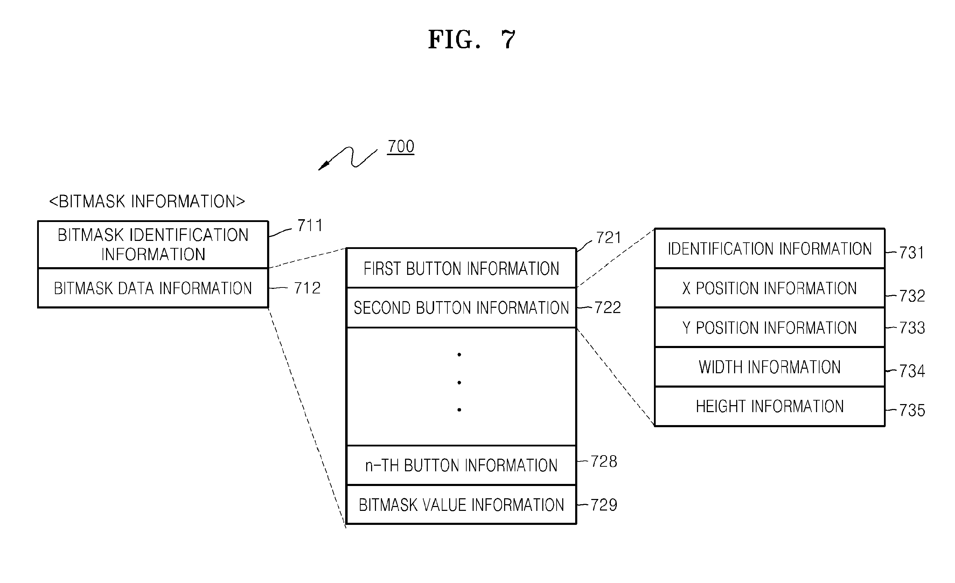

FIG. 7 is a diagram illustrating a structure of bitmask information 700 according to an exemplary embodiment. The bitmask information 700 is included in the data stream of a storage medium, and is read by the reader 420 of the reproducing apparatus 400 of FIG. 4. The bitmask information 700 includes bitmask identification information 711 and bitmask data information 712. As a menu is controlled by a user, a menu page displayed on a screen may be changed. The number, positions, types, or properties of selectable buttons are changed when the menu page is changed, and thus, the bitmask data information 712 also needs to be changed. The bitmask identification information 711 is used for identifying the bitmask data 712. The bitmask identification information 711 may be connected with identification information of the menu page.

The bitmask data information 712 includes information relating to buttons, to which bitmask values are applied, such as first button information 721, second button information 722, ..., n-th button information 728, and bitmask value information 729. The bitmask value information 729 may be encoded by using one of various methods known to reduce the size of the data.

The information related to a button to which a bitmask value is applied includes information 731 relating to the identification of the button, information 732 relating to the X position of the button, information 733 relating to the Y position of the button, information 734 relating to the width of the button, and information 735 relating to the height of the button. Information relating to the position of the button indicates the coordinates of the upper left corner of the button, from which the area of the button begins. The information 732 relating to the X position of the button indicates the position of the left side of the button, and the information 733 relating to the Y position of the button indicates the position of the upper side of the button. Information relating to the area of a button may be determined from information relating to the position of the button and information relating to the size of the button. A rectangular area that extends horizontally by the width of a button from the coordinates of the upper left corner of the button and extends vertically by the height of the button from the coordinates is determined as the area of the button.

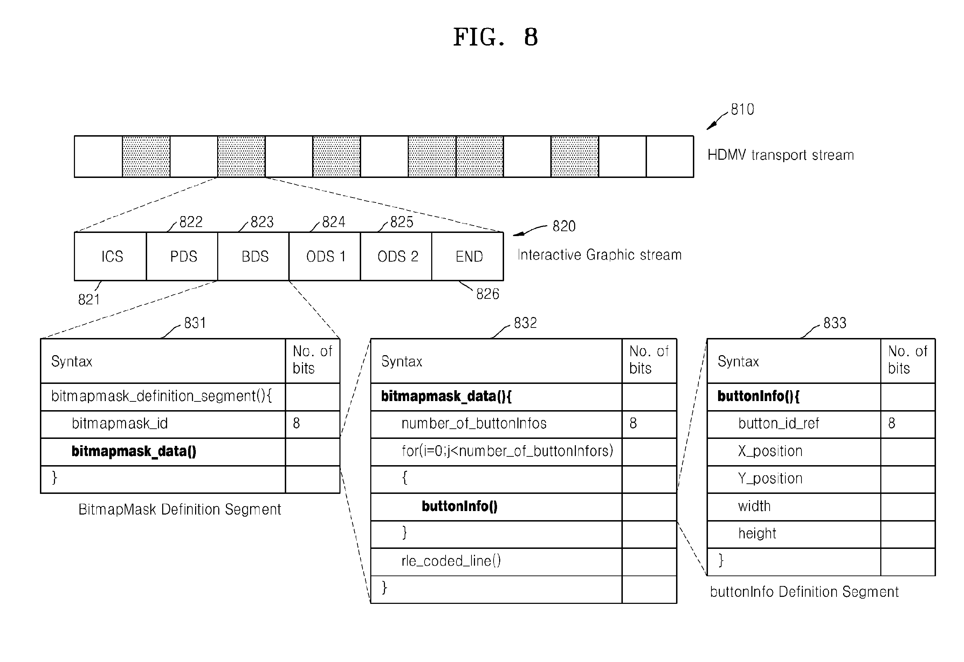

FIG. 8 is a diagram which illustrates an interactive graphic stream including bitmask information according to an exemplary embodiment. The interactive graphic stream may be included in a high definition movie mode (HDMV) transport stream 810, and the bitmask information may be a bitmapmask definition segment (BDS) 823. An interactive graphic stream 820 may include an ICS 821, a PDS 823, a plurality of ODSs 824 and 825, and end information of segment (END) 826, as well as a BDS 823.

The BDS 823 includes bitmask identification information "bitmapmask_id" and bitmask data information "bitmapmask_data." The bitmask identification information "bitmapmask_id" may correspond to page identification information or menu identification information. The page/menu identification information is defined in the ICS 821. The bitmask data information "bitmapmask_data" includes information related to a button to which a bitmask is applied and information related to a bitmask value. A button is exemplified in FIG. 8, but the embodiment of FIG. 8 may be applied to a menu. In addition, the bitmask value may be encoded by a method such as run length encoding, or the like. The information related to a button to which a bitmask is applied includes the ID of the button, the X and Y coordinates of the button, the width of the button, and the height of the button.

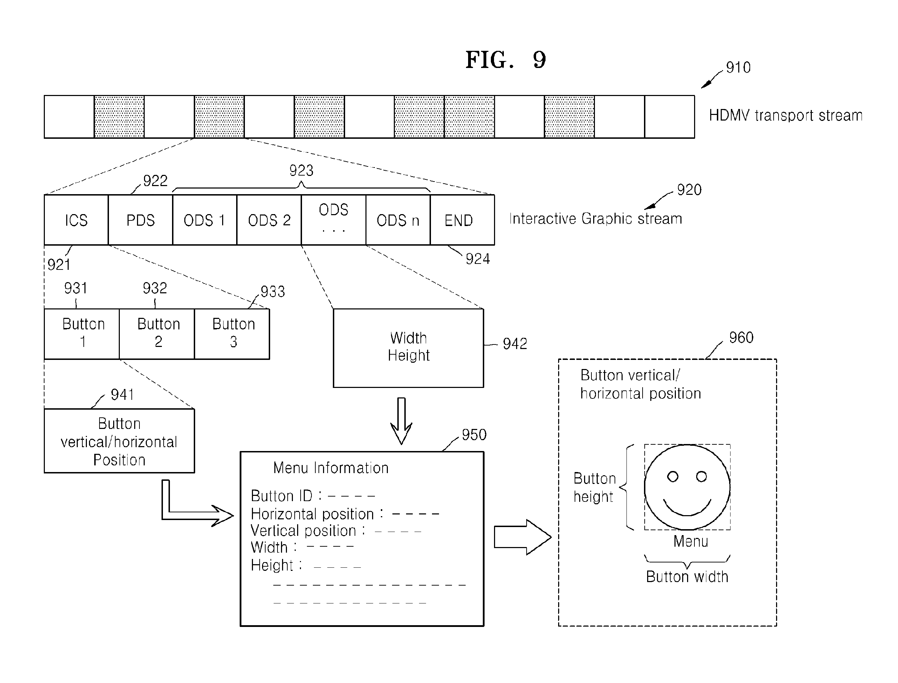

FIG. 9 is a diagram which illustrates a method of obtaining information related to the position and size of a button from an HDMV transport stream 910, according to an exemplary embodiment. Referring to FIG. 9, the HDMV transport stream 910 includes an interactive graphic stream 920. The interactive graphic stream 920 includes an ICS 921, a PDS 922, at least one ODS 923, and an END 924. The ICS 921 includes information related to a menu page which includes a plurality of buttons, i.e., first through third buttons 931, 932, and 933. The menu page information includes information related to the position of each button. Consequently, information 941 related to the position of the first button 931 may be included in the ICS 921. The description of the position information stated above with reference to FIG. 7 may be applied to FIG. 9. Accordingly, a repeated description below is omitted.

The ODS 923 includes information related to the size of each button. That is, the information 941 related to the position of the first button 931 is defined in the ICS 921, and information 942 related to the size of the first button 931 is defined in the ODS 923. Information related to the area of a button is determined from information related to the position and size of the button. For example, information related to the area of the first button 931 is determined from the information 941, which is related to the position of the first button 931 and the information 942 related to the size of the first button 931. Button information 950 is finally determined from information related to the area of a button, information related to the identification of a button, information related to the color of a button, and the like, which are included in the interactive graphic stream 920. The button information 950 determined in this manner may be displayed on a screen in the form of an image.

Referring back to FIG. 4, the controller 410 may determine whether to switch the state of a button to a selection state by comparing information relating to the position of the pointer 460, obtained from the information input 430, and the area information stated above, that is, the position and size information. In particular, when the position of the pointer 460 is positioned within a button area of a button, the state of the button may be switched to a selection state. In this manner, a menu may be controlled with the pointer 460 by using information included in a Blu-ray disc.

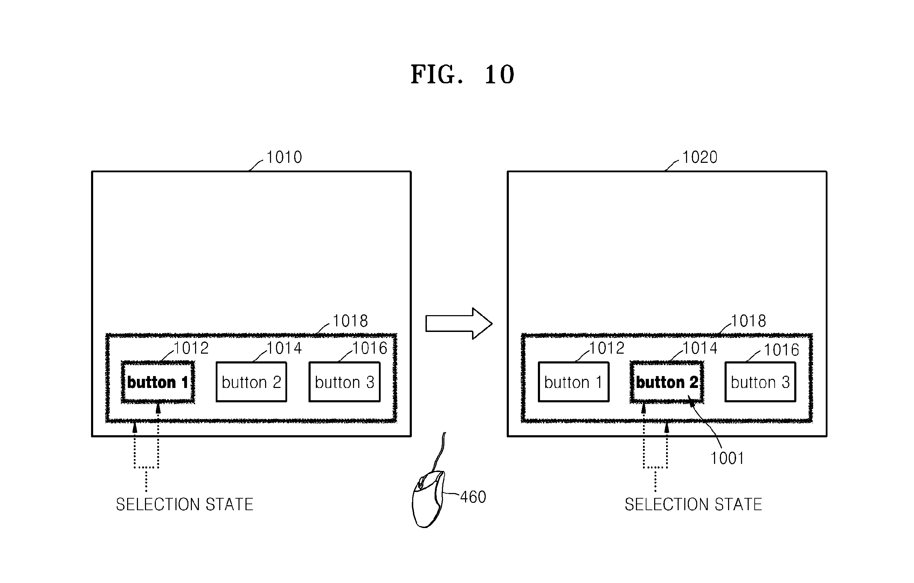

FIG. 10 is a diagram which illustrates a method of controlling a menu by using the pointer 460, according to another exemplary embodiment. Referring to FIG. 10, the position of the pointer 460 is indicated by the position of a cursor 1001 on a screen. A left screen 1010 of FIG. 10 includes a first button 1012, a second button 1014, a third button 1016, and background button 1018 that functions as a background of each button. The cursor 1001 is positioned in the area of the first button 1012.

However, as illustrated in FIG. 10, the cursor 1001 is positioned in the area of the first button 1012 and is also positioned in the area of a background menu 1018 at the same time. Accordingly, the background menu 1018 is also displayed in a selection state. Although these circumstances may be intended by a producer, basically, the background menu 1018 is a menu for decorating another menu and a command for execution is not assigned to the background menu 1018, and thus, that the background menu 1018 is in the selection state may be unnatural. Accordingly, information indicating whether a menu directed by the pointer 460 is selectable may be separately added to menu page information.

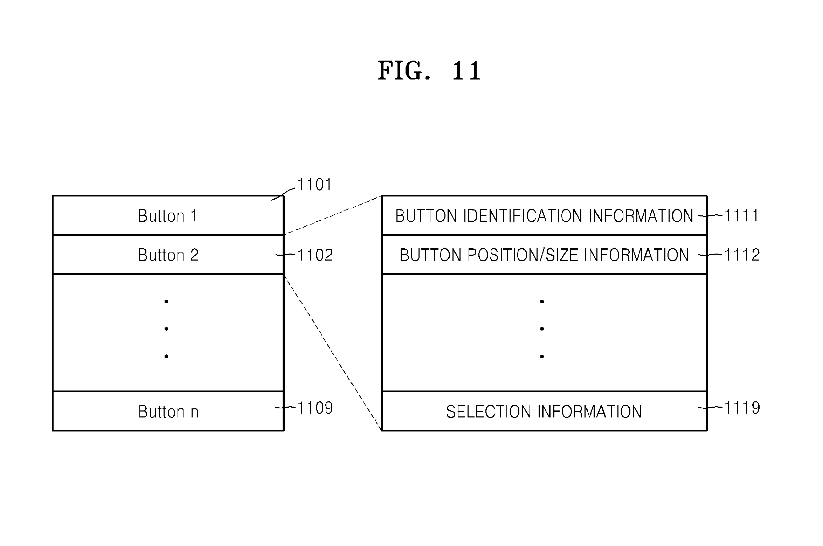

FIG. 11 is a diagram illustrating a structure of button information according to an exemplary embodiment. The button information may include various pieces of information related to a button. For example, information related to a second button 1102 may include button identification information 1111, button position/size information 1112, and selection information 1119. Since information relating to a button is included in the ICS 921 and the ODS 923, the selection information 1119 may be added to button information included in the ICS 921 or the ODS 923, according to the intention of a producer. The selection information 1119 may be included in another area including information related to a button, for example, information such as the PDS 922, or the like.

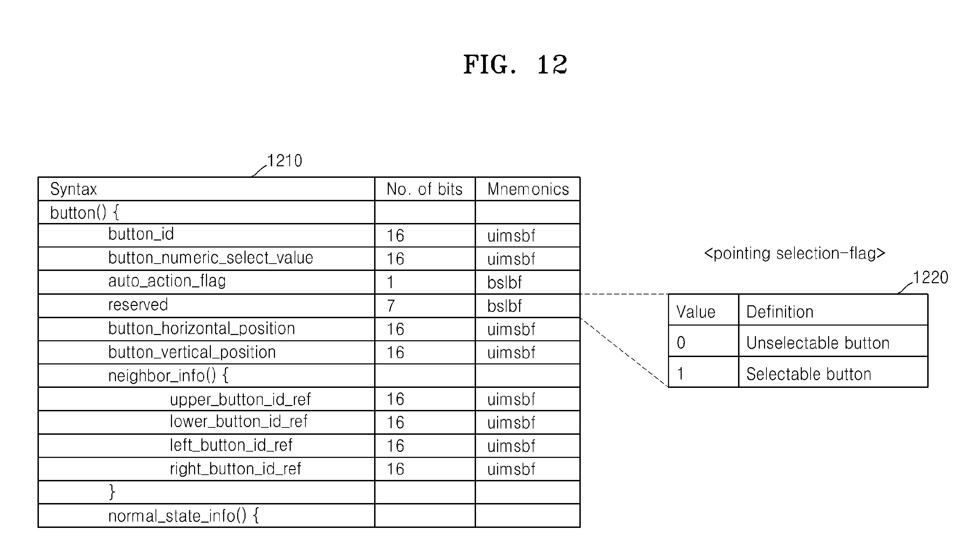

FIG. 12 is a diagram which illustrates an example in which the selection information 1119 is added to button information 1210. The button information 1210 includes "button_id" that is information related to the identification of a button, and "button_horizontal_position" and "button_vertical_position" that are information related to the position of the button. In addition, the button information 1210 may include "button_numeric_select_value" that is used when selecting a button by using a number key of a known remote control, and "auto_action_flag" that is an automatic execution of information, "neighbor_info()" that is information related to a button adjacent to the current button, and "normal_state_info()" that is information related to the normal state of a button. The button information 1210 may be included in the ICS 921. The button information 1210 includes "pointing_selection_flag" 1220 that is information which indicates whether a button where the pointer 460 is positioned is selectable. The button is not selectable when the "pointing_selection_flag" 1220 indicates "0," and the button is selectable when the "pointing_selection_flag" 1220 indicates "1," and vice versa. By adding the "pointing_selection_flag" 1220 to the button information 1210 and appropriately setting a flag value of a background menu, it is possible to control the state of the background menu to be switched to a selection state according to the position of the pointer 460.

A method of introducing bitmask information and a method of using information included in a known Blu-ray disc have been described above as a method of controlling a menu by using a pointer. Although two methods have been described independently, the two methods may not be embodied independently and may be embodied in combination with each other. In addition, although the above description is centered around a reproducing apparatus, the features described above may be applied also to a storage medium such as an optical disc, independently, or in combination with each other or with other related apparatuses, as would be understood by one skilled in the art.

When an execution input such as a click is received with respect to a button in a selection state, the information input 430 transmits corresponding input information to the central processor 412. The central processor 412 determines a command assigned to a corresponding button by the information menu 414, and instructs the command executor 416 to execute the command. The command executor 416 may make the reader 420 read data from the optical disc 470 to additionally correct information necessary for executing the command, or may directly command the decoder 440. In addition, the central processor 412 may directly instruct the decoder 440 to execute a corresponding command.

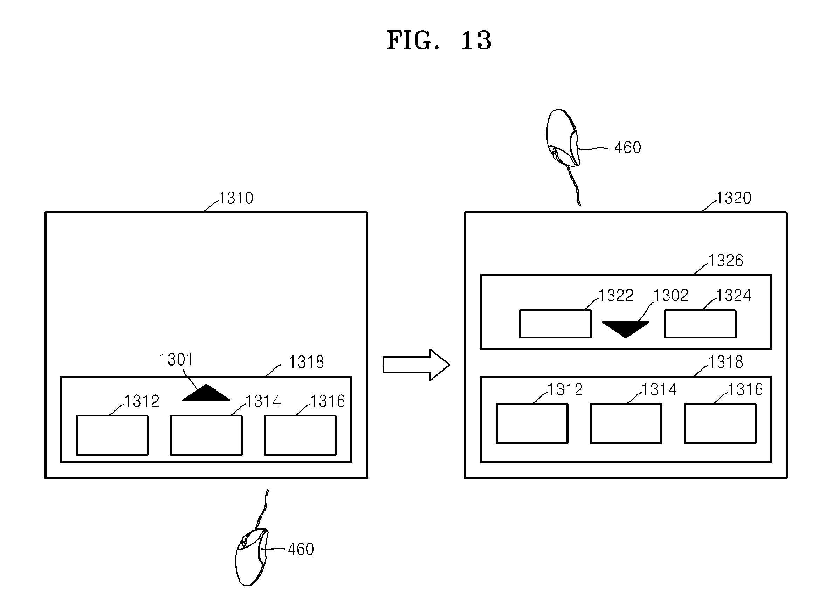

FIG. 13 is a diagram which illustrates a method of moving to a top menu or a sub-menu by using a pointer, according to an exemplary embodiment. A left screen 1310 of FIG. 13 includes a first button 1312, a second button 1314, a third button 1316, and a background menu 1318, and the left screen 1310 further includes a top menu button 1301 for allowing a user to enter the top menu. When controlling movement of a menu by using a known remote control, an "up" or "down" button of the remote controller may be used to enter a top menu or a sub-menu. When entering a top menu by using the pointer 460, the same effect may be obtained by selecting and executing the top menu button 1301. In this case, a corresponding button may include flag information which indicates that the button is selectable, and may operate based on bitmask information.

A right screen 1320 is a screen which shows that the top menu has been entered by selecting and executing the top menu button 1301 on the left screen 1310. The right screen 1320 may further include a sub-menu button 1302 which allows a user to enter the sub-menu, as well as a fourth button 1322, a fifth button 1324, and a background menu 1326 included in the top menu, compared to the left screen 1310. A method of entering the sub-menu is the same or similar to the method described above.

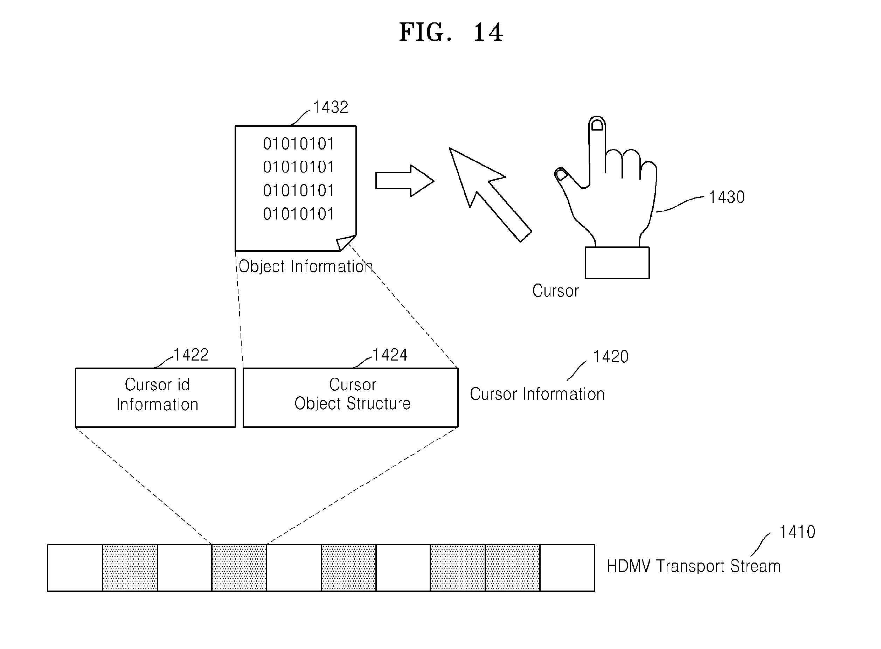

When controlling a menu by using the pointer 460, the pointer 460 interacts with a user through a cursor 1430 illustrated in FIG. 14, which is displayed on the screen. As shown in FIG. 14, cursor information 1420 may be included in an HDMV transport stream 1410. The cursor information 1420 includes cursor identification information 1422 and cursor object structure information 1424. The cursor object structure information 1424 may include information related to the image of the cursor 1430. Each menu page or button has the cursor identification information 1422 which corresponds to each page or button. The reproducing apparatus loads the image of the cursor 1430 based on the cursor identification information 1422 and displays the loaded image on a screen. As a result, the cursor 1430 having a form of an arrow or finger may be displayed on the screen. The cursor information 1422 may be included in the HDMV transport stream 1410 in the form of an interactive graphic stream or may be included in a separate stream as is known to those skilled in the art.

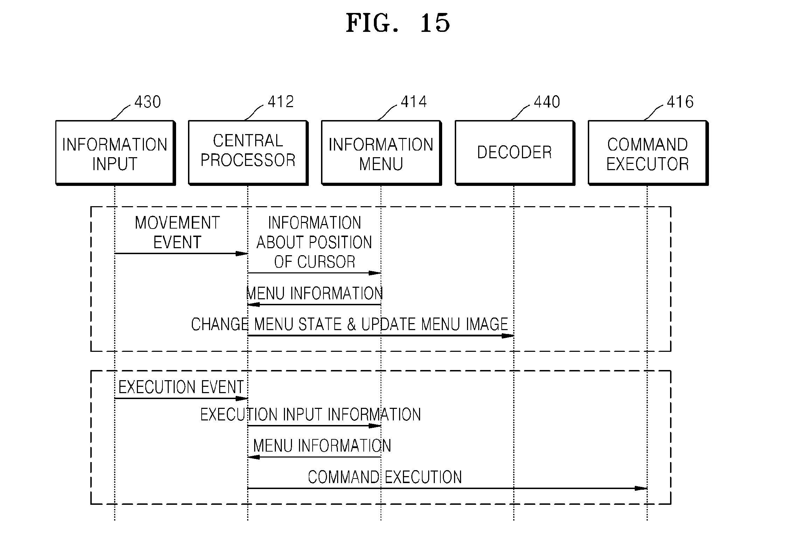

FIG. 15 is a diagram which illustrates a sequence in which a menu is controlled by using the pointer 460. First, a movement event which occurs as the pointer 460 is moved, is described. The information input 430 continuously transmits to the central processor 412 information related to the position of a cursor which corresponds to the pointer 460. The central processor 412 may obtain menu information which corresponds to the current position by sending the position information to the information menu 414. Alternatively, the central processor 412 may determine a menu, in which the current cursor is positioned, by comparing the menu information received from the information menu 414 with the position information received from the information input 430. In this operation, the identification of the menu and the coordinates, width, and height of the menu are included in the menu information. In addition, bitmask information or flag information which indicates whether a menu is selectable, is included in the menu information. Finally, the central processor 412 may switch the state of the menu, in which the current cursor is positioned, to a selection state, if necessary, and may direct the decoder 440 to update the image of the menu.

When an execution event such as a mouse click occurs in the state where the state of the menu is switched to the selection state, the information input 430 transmits the execution event to the central processor 412. The central processor 412 sends execution input information to the information menu 414, and the information menu 414 sends menu information, depending on the execution input information, to the central processor 412. In this operation, command information assigned to a menu or button in the selection state is included in the menu information. In response to the button in the selection state being a button for allowing a user to enter a top menu or sub-menu, information related to the identification of the top menu or sub-menu may be included in the menu information. Finally, the central processor 412 may direct the command executor 416 to execute a corresponding command.

One of ordinary skill in the art would conceptually interpret the block diagrams described in the exemplary embodiments to indicate a circuit for implementing principles of the inventive concept. Similarly, it would be obvious to one of ordinary skill in the art that a predetermined flowchart, a flow graph, a state transition diagram, pseudo code, etc., may be substantially expressed in a non-transitory computer-readable storage medium and indicate various processes executed by a computer or a processor, even if the computer or processor is not explicitly shown. Accordingly, the exemplary embodiments may be written as computer programs and implemented in general-use digital computers which then become special purpose computers that execute the programs using a non-transitory computer-readable storage medium. Examples of the non-transitory computer-readable storage medium include magnetic storage media (e.g., ROM, floppy disks, hard disks, etc.), optical recording media (e.g., CD-ROMs, or DVDs), etc.

The functions of various elements shown in diagrams may be provided by using not only hardware that executes suitable software, but also by exclusively using hardware. When the functions are provided by a processor, the functions may be provided by a single exclusive processor, a single common processor, or a plurality of individual processors, wherein some processors are shared. Also, the terms 'processor' and 'controller' shall not be interpreted to exclusively indicate hardware for executing software, and may unlimitedly and implicitly include digital signal processor (DSP) hardware, read-only memory (ROM) for storing software, random access memory (RAM), and a nonvolatile storage device.

In the accompanying claims, an element expressed as a unit for performing a certain function may include a predetermined method of performing the certain function, and may include a combination of circuit elements for performing the certain function, or software in a predetermined form including firmware or microcode combined with a suitable circuit for executing software for performing the certain function.

In the present specification, 'an exemplary embodiment' and other modified expressions mean that a certain feature, structure, or characteristic is included in at least one exemplary embodiment. Accordingly, the expression "an exemplary embodiment" and other modified examples in the present specification may not denote the same embodiment.

In the present specification, the expression "at least one of A and B" is used to include a selection of only A, only B, or both A and B. Furthermore, the expression "at least one of A through C" may be used to include a section of only A, only B, only C, only A and B, only B and C, or all of A through C. One of ordinary skill in the art would be able to clearly interpret a similar expression with more elements.

While this invention has been particularly shown and described with reference to preferred exemplary embodiments thereof, it will be understood by those of ordinary skill in the art that various changes in form and details may be made therein without departing from the spirit and scope of the invention as defined by the appended claims. The embodiments should be considered in a descriptive sense only and not for purposes of limitation. Therefore, the scope of the invention is defined not by the detailed description of the invention but by the appended claims, and all differences within the scope will be construed as being included in the present invention.

## Claims

1. An apparatus which controls a menu for reproducing data stored in an optical disc by using a pointer, the apparatus comprising:
a reader which reads audio/video (AV) data and interactive graphic data including at least one menu from the optical disc;
an information input which obtains information related to the position of the pointer;
a decoder which decodes the AV data and the interactive graphic data; and
a controller which determines a selection state of a button included in the at least one menu by comparing information related to a position and a size of the button included in the interactive graphic data, with the information related to the position of the pointer.

2. The apparatus of claim 1, wherein the information related to the position and size of the button is comprised in a bitmapmask definition segment (BDS) included in the interactive graphic data, and the BDS comprises a bitmask value, which represents, with "0" and "1," an image of the button included in the at least one menu, and information related to a button to which the bitmask value is applied.

3. The apparatus of claim 2, wherein the controller switches a state of the button to a selection state when a bitmask value which corresponds to the information related to the position of the pointer indicates "1" and the button is a button to which the bitmask value is applied.

4. The apparatus of claim 3, wherein the bitmask value comprises a bitmask value obtained by encoding the image of the button, represented with "0" and "1," through Run Length Encoding.

5. The apparatus of claim 1, wherein the interactive graphic data comprises an interactive composition segment (ICS) and an object definition segment (ODS), the information related to the position of the button is the coordinates of the upper left corner of the button, comprised in the ICS, and the information related to the size of the button is the width and height of the button, comprised in the ODS.

6. The apparatus of claim 5, wherein the ICS comprises flag information which indicates whether the button is selectable, and the controller determines a button which the pointer indicates, based on the information related to the position of the pointer and the information related to the position and size of the button, and switches a state of the button to a selection state when the flag information of the determined button indicates that the button is selectable.

7. The apparatus of claim 6, wherein the interactive graphic data comprises information related to a plurality of cursor images, the controller determines a cursor image which corresponds to the at least one menu from among the plurality of cursor images, and the decoder displays the determined cursor image.

8. A non-transitory computer readable storage medium which stores data that is reproduced by using a pointer, the non-transitory computer readable storage medium comprising:
audio/video (AV) data; and
interactive graphic data,
wherein the interactive graphic data includes a bitmapmask definition segment (BDS), and the BDS includes information related to a bitmask, which represents, with "0" and "1," an image of a button included in a menu, and information related to a button to which the bitmask is applied.

9. The non-transitory computer readable storage medium of claim 8, wherein the interactive graphic data comprises an interactive composition segment (ICS), the ICS comprises information related to at least one menu page, the at least one menu page comprises at least one button, and the information related to the bitmask corresponds to the information related to at least one menu page.

10. The storage medium of claim 8, wherein when the pointer is positioned where a value of the bitmask is "1," a state of a button which corresponds to the value of the bitmask is switched to a selection state.

11. A non-transitory computer readable storage medium which stores data that is reproduced by using a pointer, the non-transitory computer readable storage medium comprising:
audio/video (AV) data; and
interactive graphic data,
wherein the interactive graphic data includes an interactive composition segment (ICS) and an object definition segment (ODS), the ICS includes information related to the position of a button and flag information which indicates whether the button is selectable, and the ODS includes information related to the size of the button.

12. The non-transitory computer readable storage medium of claim 11, wherein when the pointer is positioned on the button and the flag information indicates that the button is selectable, a state of the button is switched to a selection state.

13. A method of controlling a menu of audio/video (AV) data by using a pointer, the method comprising:
obtaining information related to the position and size of a button included in at least one menu from an optical disc;
obtaining information related to the position of the pointer; and
determining a selection state of the button by comparing the information related to the position and size of the button with the information related to the position of the pointer.

14. The method of claim 13, wherein the information related to the position and size of the button is comprised in a bitmapmask definition segment (BDS) comprised in the interactive graphic data, and the BDS comprises a bitmask value, which represents, with "0" and "1," an image of the button comprised in the at least one menu, and information related to a button to which the bitmask value is applied,
wherein the determining of the selection state of the button comprises switching a state of the button to a selection state when a bitmask value which corresponds to the information related to the position of the pointer which indicates "1" and the button is a button to which the bitmask value is applied.

15. The method of claim 13, further comprising obtaining flag information from the optical disc which indicates whether the button is selectable, from the optical disc,
wherein the determining of the selection state of the button comprises switching a state of the button to a selection state when the flag information indicates that the button is selectable.
